# EUROPEAN PATENT APPLICATION

(11) **EP 3 085 575 A1**
(43) Date of publication of application: **26.10.2016**
(21) Application number: 16166937.9
(22) Date of filing: 25.04.2016
(51) Int. Cl.: B60N 2/00, A47D 7/03, A47D 13/06, A47D 15/00, A47D 13/10, B60N 2/28

(54) **ADJUSTABLE HARNESS FOR CHILD-SUPPORT DEVICE**

(30) Priority: 25.04.2015 US 201562152845 P; 04.06.2015 US 201562170895 P; 09.09.2015 US 201562215943 P
(71) Applicant: Kids II, Inc., Atlanta, GA 30305-1712 (US)
(72) Inventor: THOMSON, John Matthew, Johns Creek, GA 30005 (US)
(74) Representative: McCartney, Jonathan William

(57) **Abstract**

A harness (132) adjustment mechanism (130,134) for a child-support (104) device including a harness (132) system with at least two harness straps (136) for securing a child in a receptacle (102) of the child-support (104) device. The harness straps (136) are threaded through selected pairs of openings (148) in the child receptacle (102) so that portions of them extend behind the child receptacle (102). The adjustment mechanism (130,134) includes a tightening strap coupled to both of the harness strap (136,156) portions behind the child receptacle (102) and accessible to a caregiver so that pulling on the tightening strap tightens the fit of the harness straps (136) in a one-handed operation. A locking device is mounted on the child-support (104) device and secures the tightening strap in place until released for loosening the harness straps (136).

## Description

### Cross-Reference to Related Applications

This application claims the priority benefit of U.S. Provisional Patent Application Serial No. 62/215,943 filed September 9, 2015, U.S. Provisional Patent Application Serial No. 62/170,895 filed June 4, 2015, and U.S. Provisional Patent Application Serial No. 62/152,845 filed April 25, 2015, the entireties of which are hereby incorporated herein by reference for all purposes.

### Technical Field

The present invention relates generally to the field of infant and children's products, and more particularly to devices for securely supporting children.

### Background

There are a number of devices designed for supporting and safely holding a child. These child-supporting devices typically include a receptacle for receiving the child and a frame that supports the child receptacle. Common examples of such child-supporting devices include swings, bouncers, jumpers, rockers, highchairs, etc. For safety purposes, these devices typically include a restraint harness for securing the child in the child receptacle and an adjustment feature for adjusting the harness for proper fit. Conventional harnesses include separate shoulder and waist straps, and conventional adjustment features include slide adjusters for the straps, but two hands are generally required to make each of multiple adjustments to get a proper fit. So adjusting the shoulder and waist straps tends to be somewhat cumbersome, and the caregiver is forced to adjust one harness strap, then the other, using both hands to do so.

Accordingly, it can be seen that needs exist for improvements in harness adjustment mechanisms to enable them to be used more easily and quickly. It is to the provision of solutions meeting these and other needs that the present invention is primarily directed.

### Summary

Generally described, the present invention relates to an adjustment system that adjusts a safety harness for securing a child in a receptacle of the child-support device and that enables one-handed tightening adjustment by the caregiver. In an example embodiment, the harness system includes at least two harness straps threaded through selected pairs of openings in the child receptacle so that portions of them extend behind the child receptacle. The adjustment mechanism includes a tightening pull strap connected to both of the harness strap portions behind the child receptacle such that pulling on the tightening strap tightens the fit of the harness straps in a one-handed operation. A locking device is mounted on the child-support device and secures the tightening strap in place until released for loosening the harness straps.

These and other aspects, features, and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of example embodiments are representative and explanatory of typical embodiments of the invention, and are not restrictive of the invention, as claimed.

### Brief Description of the Drawings

**FIGURE 1** is a top perspective view of a child-support device according to an example embodiment of the present invention, showing an infant seat having a harness system and supported by a frame.
**FIGURE 2** is a top perspective view of the seat of **FIGURE 1** with the harness shown in a locked/latched position.
**FIGURE 3** is a top perspective view of the seat of **FIGURE 1** with the harness shown in an unlocked/unlatched position.
**FIGURE 4** is a bottom perspective view of the child-support device of **FIGURE 1****,** showing portions of the harness and its adjustment mechanism.
**FIGURE 5** is a bottom perspective detail view of a portion of the harness and adjustment mechanism of the child-support device of **FIGURE 4****.**
**FIGURES 6A-6C** are perspective detail views of components of the harness and adjustment mechanisms of **FIGURE** 5, showing the harness and adjustment mechanism in detached, partially attached, and fully attached positions, respectively.
**FIGURE 7** is a bottom perspective detail view of a portion of the adjustment mechanism of the child-support device of **FIGURE 4****.**

### Detailed Description of Example Embodiments

The present invention may be understood more readily by reference to the following detailed description of the invention taken in connection with the accompanying drawing figures, which form a part of this disclosure. It is to be understood that this invention is not limited to the specific devices, methods, conditions, or parameters described and/or shown herein, and that the terminology used herein is for the purpose of describing particular embodiments by way of example only and is not intended to be limiting of the claimed invention. Any and all patents and other publications identified in this specification are incorporated by reference as though fully set forth herein.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

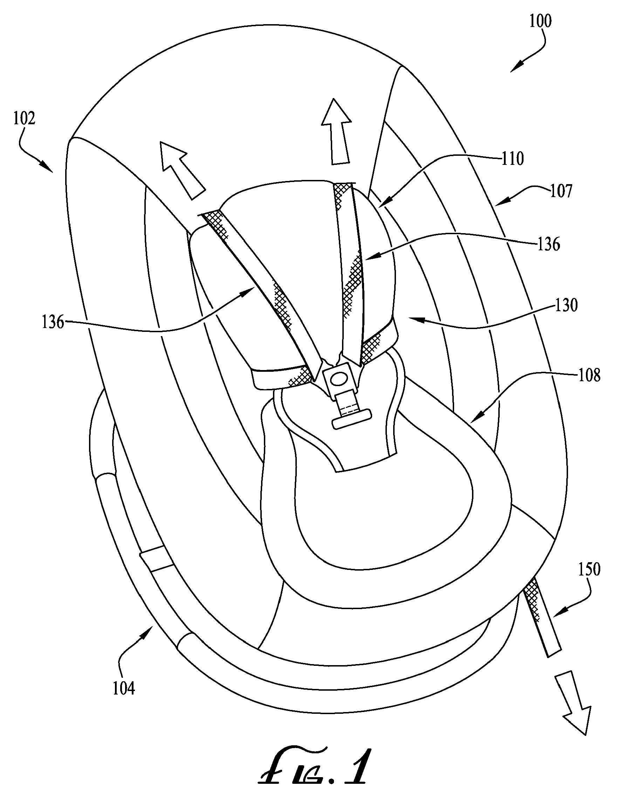

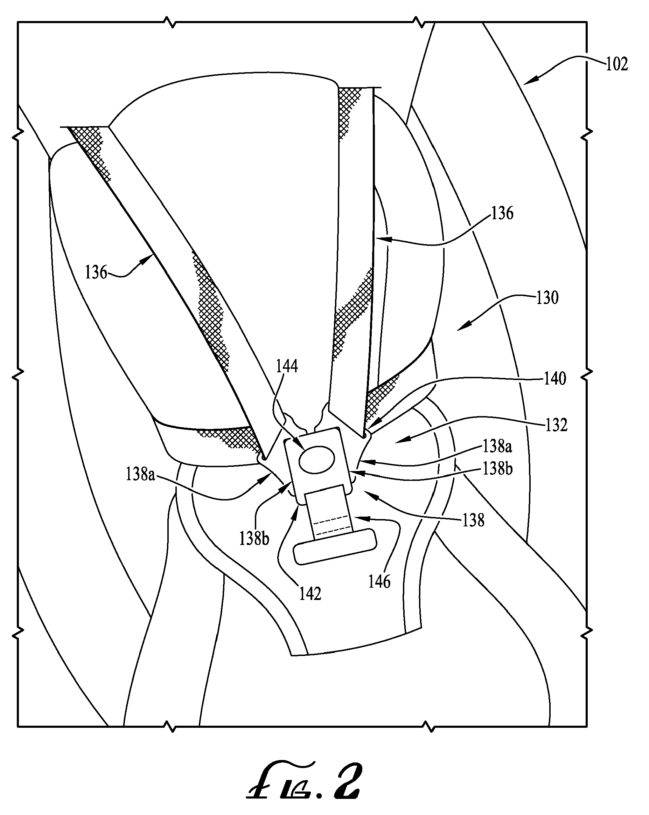

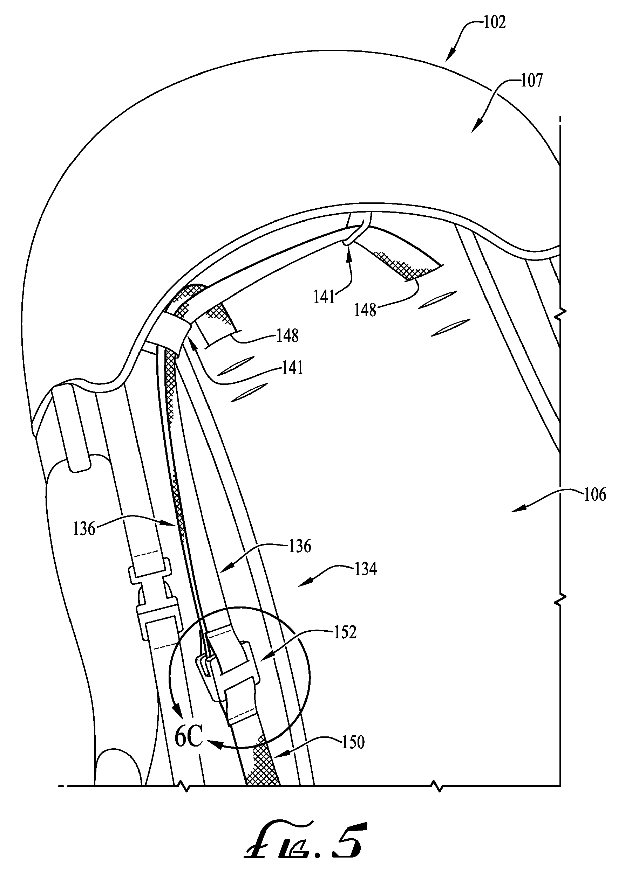

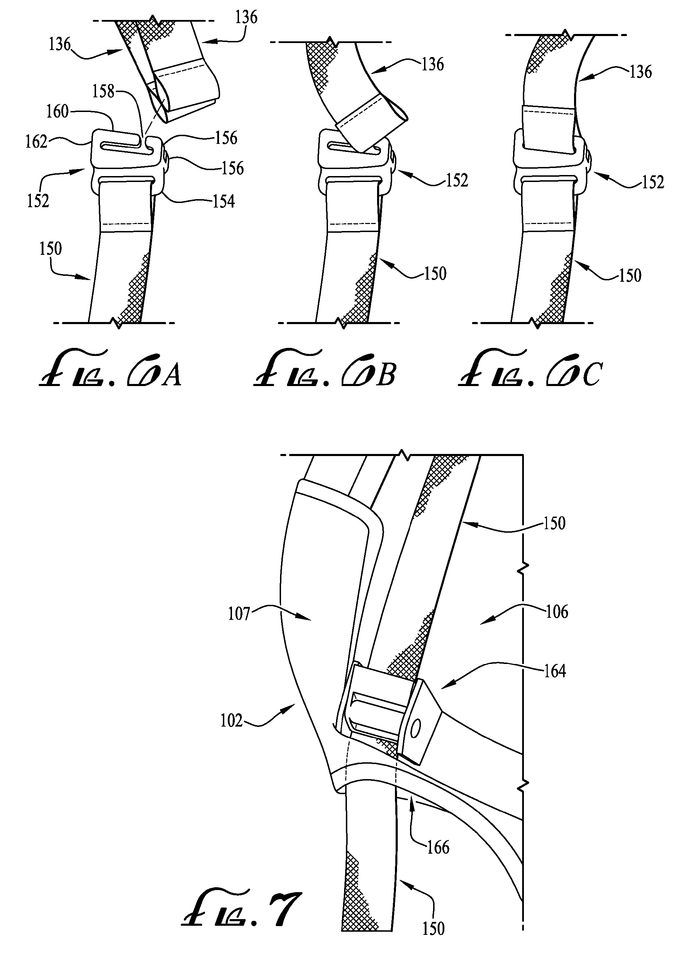

With reference now to the drawing figures, wherein like reference numbers represent corresponding parts throughout the several views, **FIGURES 1-7** show a child-support device 100 equipped with a restraint harness system 130 according to an example embodiment of the present invention. In the depicted embodiment, the child-support device 100 is a child seat, though in other embodiments the harness system 130 can be incorporated into a child-support system of another type such as a swing, bouncer, jumper, rocker, etc.

Referring particularly to **FIGURES 1-3****,** the child-support device 100 includes a receptacle 102 for receiving a child and a support 104 that supports the child receptacle. The support 104 of the depicted embodiment is a rigid frame configured for resting on the floor and supporting the child receptacle 102 from below, but in other embodiments the support can be provided by webbing configured for supporting the child receptacle from above or by other conventional support elements or systems. The child receptacle 102 of the depicted embodiment includes a seat shell 106 and a seat liner (e.g., cushioned fabric or other soft goods) 107 covering the seat shell, together forming a seat pan portion 108 and a seat back portion 110 configured for supporting the child in a seating position, but in other embodiments the child receptacle can be configured for supporting the child in a lying position. And in other embodiments, the child receptacle can be configured for supporting itself and thus it can be provided by itself without a support.

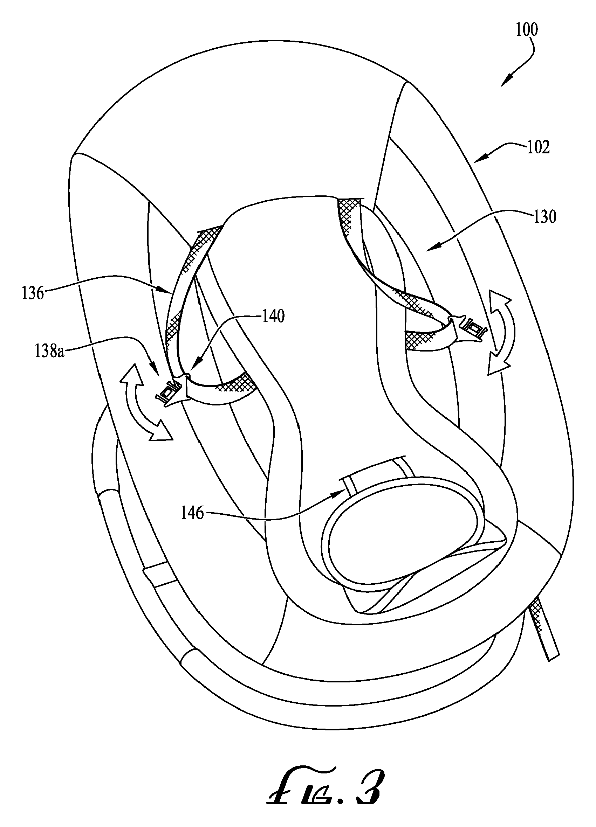

The harness system 130 includes a restraint harness or seatbelt 132 for securing a child in the child receptacle 102 and an adjustment mechanism 134 for adjusting the harness for a snug but comfortable fit. The harness 132 includes at least two straps 136 and at least two couplings 138. The straps 136 can be provided by for example two shoulder straps made of conventional webbing and configured to fit over the infant's shoulders and chest. The couplings 138 can be provided by buckles or other conventional couplings for releasably securing straps in place. In typical embodiments, the couplings 138 include first and second mating coupling parts 138a and 138b, for example the depicted male and female clip or latch elements. The first coupling parts 138a are on the harness straps 136, for example they can each include a slide loop 140 that slidingly receives the respective harness strap 136 so that they can slide along the length of the strap (as indicated by the directional arrows of **FIGURE 3****)**. As such, the variable location of the slide loop/coupling parts 140/138a along the harness straps 136 at a particular position divides the harness straps into variable shoulder strap portions and variable lap/waist strap portions. The second coupling parts 138b can be combined into a unitary crotch-positioned housing 142 that also includes an actuator 144 for joint release-operation of both of the first coupling parts 138a and that is attached to the child receptacle 102 by a crotch strap 146. In other embodiments, the two couplings are adapted to mate with each other.

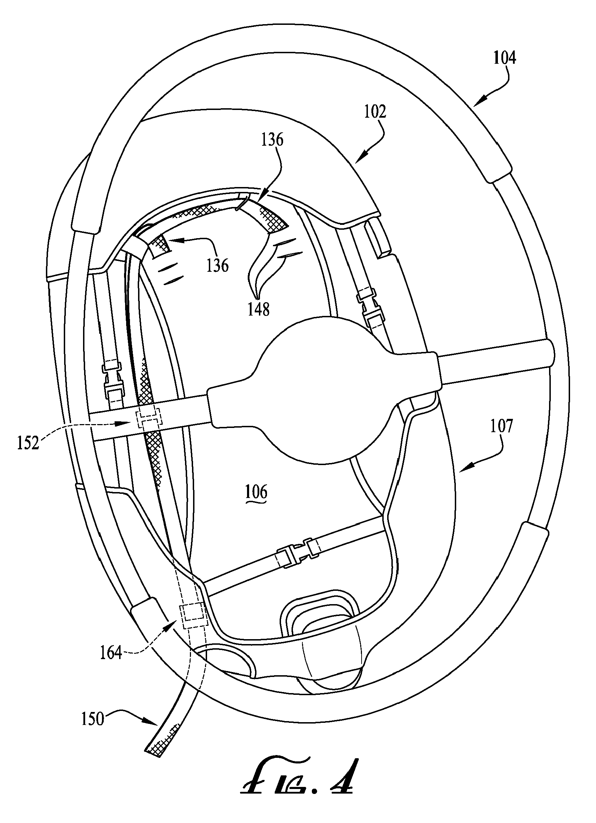

Referring additionally to **FIGURES 4-7****,** the child receptacle 102 includes a series of openings 148 through it for threading each of the harness straps 136, for example the depicted three vertically spaced horizontal slots per harness strap. Each one of the harness straps 136 is threaded and extends through one of its openings 148, with the particular opening selected to provide the desired location for attaching the strap to the child receptacle 102. Each of the straps 136 can be removed from one of its openings 148 (i.e., pulled out from the front side of the child receptacle 102) and reinserted/rethreaded into another one of its openings to enable the harness system 132 comfortably fit different-sized children (e.g., as they grow up). As such, when installed for use, each harness strap 136 has a front portion extending in front of the child receptacle 102 and a rear portion extending behind the child receptacle, with the lengths of these portions being variable depending on the particular opening 148 selected and the length adjustment of the straps (by the adjustment mechanism 134). In other embodiments, the harness straps and openings can be positioned in different locations.

Instead of each of the harness straps 136 having both opposite end portions attached to the child receptacle 102, only one end portion of each harness strap is attached to the child receptacle. As depicted, the bottom end (front-positioned) portion of each harness strap 136 is attached to the child receptacle 102, for example by stitching, rivets, or other conventional fasteners. And the top end (rear-positioned) portions of both harness straps 136 are attached to a tightening or pull strap 150 by a three-way connector 152. The pull strap 150 can be provided by nylon webbing, a cord, a chain, or another conventional elongate element that can be connected to the connector 152 and pulled to apply a pulling force on both the harness straps 136. In some embodiments, the pull strap 150 includes a handle (not shown) at its free/pulling end. Typically, the rear portions of the harness straps 136 are routed through retainers (e.g., flexible or rigid loops attached to the soft goods 107) 141 for training them in a neat manner.

The three-way connector 152 includes an attachment 154 for the pull strap 150 and two attachments 156 for the harness straps 136. The pull-strap attachment 154 can be provided by a loop element through which a looped end of the pull strap 150 is routed to fixedly attach the pull strap to the connector 152, as depicted. And the harness-strap attachments 156 can each be provided by a non-continuous loop element through which a looped end of the respective harness strap 136 is routed to removably attach the harness strap to the connector 152. For example, the non-continuous loop element 156 can form a gap 158 (in communication with the interior loop space defined by the peripheral loop element) through which a looped end of the respective harness strap 136 can be inserted into and removed from the loop, as depicted in **FIGURES 6C-****6C.** The gap 158 is typically formed in a long transverse side 160 of the loop attachment 156, not in a short extension end 162 of it, so that the looped end of the respective harness strap 156 cannot slide transversely out of the loop and off the connector 152, thereby securing the strap and connector together nicely. At the same time, a user can still easily detach both of the harness straps 136 from the three-way connector 152, reposition/rethread the straps through different selected pairs of the openings 148, and then reattach both of the harness straps back to the connector, as desired to obtain the best fit of the harness for the particular child. In other embodiments, the harness straps are tied together or joined in some other fashion.

The adjustment mechanism 130 also includes a locking device 164 for securing the pull/tightening strap 150 in its tightened position. The locking device 164 can be mounted to the seat shell 106 or a frame or other portion of the child receptacle 102. The locking device 164 can be provided by any conventional fabric-securing device that can be manipulated between a locked position securing the pull strap 150 from movement relative to it and an unlocked position with the pull strap released and free to move relative to it. In the depicted embodiment, for example, the locking device 164 includes a toggle with gripping teeth that pivots between the locked position with the teeth engaging the pull strap 150 and the unlocked position with the teeth disengaged from the pull strap. In other embodiments, the locking device is provided by a ratchet, clamp, or other locking mechanism known in the art. A free end portion of the pull strap 150 extends outward beyond the locking device 164 and provides a location for one-handed gripping to apply the pulling force to tighten the harness straps 136. Typically, the free end portion of the pull strap 150 extends through an opening 166 in the child-receptacle 102 for example formed in the soft-goods seat liner 107.

With the rear portions of the harness straps 136 behind the child receptacle 102 both coupled to the pull strap 150, and with the front portion of the harness straps slidingly routed through the coupling loops 140, a caregiver can apply a pulling force to only the pull strap, which distributes the pulling force evenly over both the straps to adjust them by pulling them to rear. In this way, the rear portions of the harness straps 136 are lengthened and the front portions of the straps are shortened to adjust the harness 132 tighter, with the length of the shoulder and waist portions of the strap front portion automatically adjusted for a good fit. And in this way, the harness straps 136 can quickly and easily be tightened in a one-handed operation. To loosen the harness straps 136, the lock devices 164 can be unlocked and the harness straps pulled in the opposite direction (rear to front) to lengthen the front portions of the straps as needed.

While the invention has been described with reference to preferred and example embodiments, it will be understood by those skilled in the art that a variety of modifications, additions and deletions are within the scope of the invention, as defined by the following claims.

For the avoidance of doubt, the present application extends to the subject-matter described in the following numbered paragraphs (referred to as "Para" or "Paras"):
1. An adjustment mechanism for a restraint harness system comprising two harness straps for securing a child, the adjustment mechanism comprising:
   a pull strap connected to the two harness straps, wherein pulling on the pull strap in turn pulls on and tightens the fit of the two harness straps securing the child; and
   a locking device configured to retain the pull strap from movement relative thereto when in a locked position and configured to release the pull strap for movement relative thereto when in an unlocked position.
2. The adjustment mechanism of Para 1, wherein the pull strap is connected to the two harness straps by a removable connector, wherein the two harness straps can be decoupled from the removable connector for re-threading through selected openings in a child-support device.
3. The adjustment mechanism of Para 2, wherein the pull strap is connected to the two harness straps by a three-way connector including a pull-strap attachment for fixedly attaching the pull strap and two harness-strap attachments for removably attaching the two harness straps.
4. The adjustment mechanism of Para 3, wherein the harness-strap attachments of the three-way connector each include a non-continuous loop element that retains the respective harness strap, wherein the non-continuous loop element includes a gap through which the respective harness strap can be inserted and removed.
5. The adjustment mechanism of any preceding Para, wherein the pull strap is made of webbing.
6. The adjustment mechanism of any preceding Para, further comprising at least two couplings operable to releasably connect the two harness straps together, wherein each of the couplings includes a loop element through which the respective harness can slide for adjustment.
7. A restraint harness system for a child-support device, the harness system comprising:
   two harness straps for securing a child in the child-support device, wherein a first end portion of each of the two harness straps is fixedly attached to the child-support device;
   two couplings that releasably connect the two harness straps together, wherein each of the couplings includes a loop element through which the respective harness can slide for adjustable positioning;
   a pull strap connected to a second opposite end portion of each of the two harness straps, wherein pulling on the pull strap in turn pulls on and tightens the fit of the two harness straps securing the child; and
   a locking device configured to retain the pull strap from movement relative thereto when in a locked position and configured to release the pull strap for movement relative thereto when in an unlocked position, wherein in the unlocked position the pull strap and the attached thereto harness straps can be loosened.
8. The harness system of Para 7, wherein the harness straps extend to behind the child-support device, and wherein the pull strap is connected to the two harness straps behind the child-support device.
9. The harness system of Para 7 or 8, wherein the pull strap is connected to the two harness straps by a removable connector, wherein the two harness straps can be decoupled from the removable connector for re-threading through selected openings in the child-support device.
10. The harness system of Para 9, wherein the pull strap is connected to the two harness straps by a three-way connector including a pull-strap attachment for fixedly attaching the pull strap and two harness-strap attachments for removably attaching the two harness straps.
11. The harness system of Para 10, wherein the harness-strap attachments of the three-way connector each include a non-continuous loop element that retains the respective harness strap, wherein the non-continuous loop element includes a gap through which the respective harness strap can be inserted and removed.
12. The harness system of Para 11, wherein the gap of the non-continuous loop element of each of the harness-strap attachments is formed in a transverse side of the non-continuous loop element.
13. The harness system of any of Paras 7-11, wherein the two couplings each include first and second mating coupling parts, wherein each of the first coupling parts includes a respective one of the loop elements, and wherein the two second coupling parts are combined into a unitary housing that further includes an actuator for joint release-operation of both of the couplings.
14. A device for supporting a child, comprising:
   a receptacle for receiving and supporting a child; and
   a harness system for restraining the child in the child-receptacle, wherein the harness system includes:
      two harness straps for securing the child in the child-support device, wherein a first end portion of each of the two harness straps is fixedly attached to the child-support device;
      two couplings that releasably connect the two harness straps together, wherein each of the couplings includes a loop element through which the respective harness can slide for adjustable positioning;
      a pull strap connected to a second opposite end portion of each of the two harness straps, wherein pulling on the pull strap in turn pulls on and tightens the fit of the two harness straps securing the child; and
      a locking device configured to retain the pull strap from movement relative thereto when in a locked position and configured to release the pull strap for movement relative thereto when in an unlocked position, wherein in the unlocked position the pull strap and the attached thereto harness straps can be loosened.
15. The child-support device of Para 14, wherein the harness straps extend through openings in the child receptacle to behind the child-support device, wherein the pull strap is connected to the two harness straps behind the child-support device.
16. The child-support device of Para 14 or 15, wherein the pull strap is connected to the two harness straps by a removable connector, wherein the two harness straps can be decoupled from the removable connector for re-threading through selected one of the openings in the child-support device.
17. The child-support device of any of Paras 14-16, wherein the pull strap is connected to the two harness straps by a three-way connector including a pull-strap attachment for fixedly attaching the pull strap and two harness-strap attachments for removably attaching the two harness straps.
18. The child-support device of any of Paras 14-17, wherein the harness-strap attachments of the three-way connector each include a non-continuous loop element that retains the respective harness strap, wherein the non-continuous loop element includes a gap through which the respective harness strap can be inserted and removed.
19. The child-support device of any of Paras 14-18, wherein the two couplings each include first and second mating coupling parts, wherein each of the first coupling parts includes the respective loop element, and wherein the two second coupling parts are combined into a unitary crotch-positioned housing.
20. The child-support device of any of Paras 14-19, wherein the pull strap and the harness straps are made of webbing.

## Claims

1. An adjustment mechanism for a restraint harness system comprising two harness straps for securing a child, the adjustment mechanism comprising:
a pull strap arranged to be connected to the two harness straps, wherein in use, pulling on the pull strap in turn pulls on and tightens the fit of the two harness straps securing the child; and
a locking device configured to retain the pull strap from movement relative thereto when in a locked position and configured to release the pull strap for movement relative thereto when in an unlocked position.

2. The adjustment mechanism of claim 1, wherein the pull strap is connected to the two harness straps by a removable connector, wherein the two harness straps can be decoupled from the removable connector for re-threading through selected openings in a child-support device.

3. The adjustment mechanism of claim 2, wherein the pull strap is connected to the two harness straps by a three-way connector including a pull-strap attachment for fixedly attaching the pull strap and two harness-strap attachments for removably attaching the two harness straps.

4. The adjustment mechanism of claim 3, wherein the harness-strap attachments of the three-way connector each include a non-continuous loop element that retains the respective harness strap, wherein the non-continuous loop element includes a gap through which the respective harness strap can be inserted and removed.

5. The adjustment mechanism of claim 4, wherein the gap of the non-continuous loop element of each of the harness-strap attachments is formed in a transverse side of the non-continuous loop element.

6. The adjustment mechanism of any preceding claim, wherein the pull strap is made of webbing.

7. The adjustment mechanism of any preceding claim, further comprising at least two couplings operable to releasably connect the two harness straps together, wherein each of the couplings includes a loop element through which the respective harness can slide for adjustment.

8. A restraint harness system for a child-support device, the harness system comprising:
two harness straps for securing a child in the child-support device, wherein a first end portion of each of the two harness straps is fixedly attached to the child-support device;
two couplings that releasably connect the two harness straps together, wherein each of the couplings includes a loop element through which the respective harness can slide for adjustable positioning; and
an adjustment mechanism in accordance with any of claims 1-7, wherein the pull strap is connected to a second opposite end portion of each of the two harness straps, wherein pulling on the pull strap in turn pulls on and tightens the fit of the two harness straps securing the child; and
wherein in the unlocked position of the locking device, the pull strap and the attached thereto harness straps can be loosened.

9. The harness system of claim 8, wherein the harness straps extend to behind the child-support device, and wherein the pull strap is connected to the two harness straps behind the child-support device.

10. The harness system of claim 8 or 9, wherein the two couplings each include first and second mating coupling parts, wherein each of the first coupling parts includes a respective one of the loop elements, and wherein the two second coupling parts are combined into a unitary housing that further includes an actuator for joint release-operation of both of the couplings.

11. A device for supporting a child, comprising:
a receptacle for receiving and supporting a child; and
a harness system in accordance with any of claims 8-10 for restraining the child in the child-receptacle, wherein each of the two harness straps is fixedly attached to the child-support device.

12. The device of claim 11, wherein the two couplings each include first and second mating coupling parts, wherein each of the first coupling parts includes the respective loop element, and wherein the two second coupling parts are combined into a unitary crotch-positioned housing.

13. The adjustment mechanism of any of claims 1-7, the restraint harness system of any of claims 8-10, or the device of claim 11 or 12, wherein the pull strap and/or the harness straps are made of webbing.
